(19) **Europäisches Patentamt**
**European Patent Office**
**Office européen des brevets**

(11) **EP 1 920 617 B1**

(12) **EUROPEAN PATENT SPECIFICATION**

(45) Date of publication and mention of the grant of the patent:
**14.08.2013 Bulletin 2013/33**

(21) Application number: **06778557.6**

(22) Date of filing: **31.08.2006**

(51) Int Cl.:
***H04W 16/00*** *(2009.01)*

(86) International application number:
**PCT/FI2006/050374**

(87) International publication number:
**WO 2007/026054 (08.03.2007 Gazette 2007/10)**

(54) **Resource allocation based on a load factor estimated by taking interference cancellation into account**

Ressourcenzuordnung anhand eines Belastungsfaktors, welcher unter Berücksichtigung von Störungsunterdrückung geschätzt wird

Allocation de ressources basée sur un facteur d'intensité de trafic qui est estimé considérant la suppression d'interférences

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.09.2005 FI 20055469**
**10.11.2005 US 270637**

(43) Date of publication of application:
**14.05.2008 Bulletin 2008/20**

(73) Proprietor: **Nokia Siemens Networks Oy**
**02610 Espoo (FI)**

(72) Inventors:
• **KINNUNEN, Pasi**
**FI-90240 Oulu (FI)**
• **VIHRIÄLÄ, Jaakko**
**FI-90800 Oulu (FI)**
• **HORNEMAN, Kari**
**FI-90800 Oulu (FI)**

(74) Representative: **Borgström, Markus**
**Nokia Siemens Networks Oy**
**CEF CTO IPR/ Patent Administration**
**80240 Munich (DE)**

(56) References cited:
**EP-A1- 1 353 451     EP-A1- 1 581 018**
**WO-A1-01/62032     WO-A1-03/103183**
**WO-A1-2005/081442     WO-A1-2006/104347**
**WO-A2-2004/082154**

• **"Overload Indicator Command Triggering", 3GPP TSG-RAN WG2 #45 BIS, XX, XX, 10 January 2005 (2005-01-10), pages 1-4, XP002370693,**
• **VIHRIALA J. ET AL.: 'Impacts of SQ-PIC to capacity and coverage in WCDMA uplink' SPREAD SPECTRUM TECHNIQUES AND APPLICATIONS, 2004 IEEE EIGHT INTERNATIONAL SYMPOSIUM 30 August 2004 - 02 September 2004, pages 849 - 853, XP010755155**

**Description**

**FIELD**

The invention relates to a method and arrangement of controlling radio resources in a radio network.

**BACKGROUND**

Radio network planning includes several tasks, such as dimensioning and capacity and coverage planning of the network.

In dimensioning, a rough number of base stations and other network elements are estimated depending on the radio propagation environment and operator's requirements, for instance. Dimensioning takes into account several parameters, such as coverage regions, propagation environment, available spectrum and traffic density, for instance.

One tool used in dimensioning is the calculation of a link budget. In a WCDMA (Wideband Code Division Multiple Access) system, there are some system-specific parameters in calculation of the link budget. One such parameter is interference margin, which has to be larger when more loading of the system is allowed. Loading of the system is estimated by a load factor. The load factor of the j$^{th}$ user can be calculated by

$$(1) \qquad L_j = \frac{1}{1 + \dfrac{W}{R_j v_j (E_b / N_0)_j}},$$

wherein
$L_j$ = load factor of user j
$W$ = WCDMA chip rate
$R_j$ = bit rate of user j $v_j$ = activity factor of user j at physical layer
$E_b/N_0$ = signal energy per bit divided by noise spectral density.

Formula (1) depicts a situation where there is no interference from other cells, that is, there is only one user.

In CDMA based network systems, noise rise (NR) is measured to control BS usage and keep it at a stable operation point. A stabile and robust network control method is required to track NR changes when new UE connections are added to BS or old UE connections are dropped. Noise rise is connected to the load factor by equation (2).

$$(2) \qquad NR = \frac{1}{1 - \sum_{j=1}^{N} L_j},$$

wherein
N = number of users.

By taking interference from other cells into account, equation (3) is obtained:

$$(3) \qquad NR = \frac{1}{1 - (1+i) \sum_{j=1}^{N} \dfrac{W}{R_j v_j (E_b / N_0)_j}},$$

wherein
$i$ is a ratio between the other cell interference and the own cell interference.

By using equation (3), a base station is able to calculate NR change when required $(E_b/N_0)_j$ is known for each user *j*. Signal energy per bit depends on a predefined Quality of Service parameter of the service, bit rate, and receive antenna diversity, for instance.

The estimates for the load factors can be used to determine the number of mobile terminals served by the base stations.

The prior art fails to take into account some important parameters, which may have influence on the load individual users cause to the network. Failing to provide correct estimates for the load of the users may lead to too a low number of users served by the network. Network resources may thus become non-optimally controlled and used. Prior art include EP 1353451, VIHRIALA J. ET AL.: "Impacts of SQ-PIC to capacity and coverage in WCDMA uplink", SPREAD SPECTRUM TECHNIQUES AND APPLICATIONS, 2004 IEEE EIGHT INTERNATIONAL SYMPOSIUM, 30 August 2004 (2004-08-30) - 2 September 2004 (2004-09-02), pages 849-853, and "Overload Indicator Command Triggering", 3GPP TSG-RAN WG2 #45 BIS, Document R2-050172, pages 1-4,10 January 2005 (2005-01-10) -14 January 2005 (2005-01-14), Sophia Antipolis (FR).

## SUMMARY

An object of the present invention is thus to provide a method and an apparatus for implementing the method so as to alleviate the above disadvantages.

In an aspect of the invention, there is provided a method as disclosed in claim 1.

In another aspect of the invention, there is provided a radio network as disclosed in claim 4.

In another aspect of the invention, there is provided a radio network controller as disclosed in claim 10.

In still another aspect of the invention, there is provided a base station as disclosed in claim 12.

In still another aspect of the invention, there is provided a computer program as disclosed in claim 13.

The preferred embodiments of the invention are disclosed in the dependent claims.

The invention relates to allocation of resources in a radio network. Especially, the invention relates to allocation of resources in uplink transmission, that is, transmission from mobile stations to base stations of the radio network. The invention is applicable in a radio network using a CDMA (Code Division Multiple Access) access method. Thus, a UMTS (Universal Mobile Telephony System) network applying a WCDMA (Wideband CDMA) access protocol is one example of a radio network according to the invention.

In the invention, load of the network is continuously estimated. Each user and the parameters of the user's connections, such as bit rate or energy of each bit, affect the load of the network elements, such as base stations. Thus, the network needs to estimate load of each uplink connection in the serving network element and also in the neighbouring network elements in order to be able to decide on the resource allocation in the network.

In the invention, interference cancellation is performed on one or more uplink signals. In the solution according to the invention, the interference reducing effect of the interference cancellation is taken into account when estimating the load of individual uplink connections and ultimately of the whole network. For example, if the interference cancellation is able to reduce amount "b" of the interference in a received uplink signal, the network may reduce the load factor calculated for the signal correspondingly by a factor "b" or a factor dependent on "b".

An advantage of the method and arrangement of the invention is that the load of the network can be estimated so as to better reflect the effective load situation in the network. By reducing the cancelled interference from the load estimates, more traffic may be accepted to the network, which gives more efficient utilization of the network resources.

## DRAWINGS

In the following the invention will be described in greater detail by means of preferred embodiments with reference to the attached drawings, in which

Figure 1 illustrates the structure of a telecommunication system,

Figure 2 shows an embodiment of a receiver,

Figure 3 shows another embodiment of a receiver,

Figure 4 shows an embodiment of an arrangement according to the invention,

Figure 5 shows an embodiment of the method according to the invention.

## SOME EMBODIMENTS

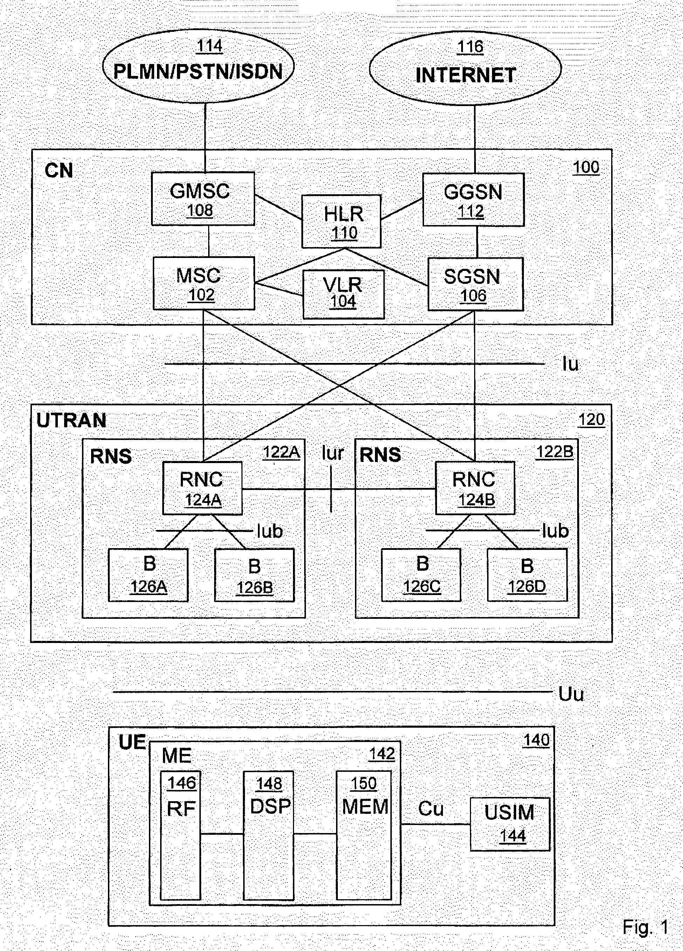

In one embodiment of the invention, the network is a UMTS network applying WCDMA technology. In the following, the structure of the UMTS network is discussed on a general level with reference to Figure 1.

Structurally, a UMTS network can be divided into a core network (CN) 100, a UMTS terrestrial radio access network (UTRAN) 120, and user equipment (UE) 140. The core network and the UTRAN are part of a network infrastructure of the wireless telecommunications system.

The structure of the core network 100 corresponds to a combined structure for establishing circuit-switched connections and packet-switched connections.

A mobile services switching center (MSC) 102 is the center point of the circuit-switched side of the core network 100. The tasks of the mobile services switching center 102 include switching, paging, user equipment location registration, handover management, collection of subscriber billing information, encryption parameter management, frequency allocation management, and echo cancellation.

Large core networks 100 may have a separate gateway mobile services switching center (GMSC) 108, which takes care of circuit-switched connections between the core network 100 and external networks 114. An external network 114 can be for instance a public land mobile network (PLMN) or a public switched telephone network (PSTN).

A home location register (HLR) 110 contains a permanent subscriber register, which includes, for instance, an international mobile subscriber identity (IMSI), a mobile subscriber ISDN number (MSISDN) and an authentication key. A visitor location register (VLR) 104, which is typically in the same physical device as the MSC, contains roaming information on user equipment 140 in the area of the mobile services switching center 102. The information contents in a visitor location register 104 is almost equal to the information contents in the home location register 110, but in the visitor location register 104 the information is kept only temporarily.

A serving GPRS support node (SGSN) 106 is the center point of the packet-switched side of the core network 100. The main task of the serving GPRS support node 106 is to transmit and receive packets with the user equipment 140 supporting packet-switched traffic. The serving GPRS support node 106 contains subscriber and location information related to the user equipment 140.

A gateway GPRS support node (GGSN) 112 is the packet-switched side counterpart to the gateway mobile services switching center 108 of the circuit-switched side with the exception, however, that the gateway GPRS support node 112 must also be capable of routing traffic from the core network 100 to external packet data networks 116, whereas the gateway mobile services switching center 108 only routes incoming traffic. The external packet data network 116 is represented by the Internet.

The UTRAN may include at least one radio network sub-system (RNS) 122A, 122B, each of which includes at least one radio network controller (RNC) 124A, 124B and at least one Node B 126A to 126D controlled by the RNC. Node B implements a Uu radio interface, through which the user equipment 140 may access the network infrastructure.

The user equipment 140, or the mobile terminal, may include two parts, which are mobile equipment (ME) 142 and a UMTS subscriber identity module (USIM) 144. The mobile equipment also includes radio frequency parts 146 for providing the Uu interface. The user equipment may further include a digital signal processor 148, memory 150, and computer programs for executing computer processes. The user equipment may further include an antenna, a user interface, and a battery. The USIM comprises user-related information and information related to information security, such as an encryption algorithm.

In a DS-CDMA (Direct Sequence CDMA) system, user data is multiplied with a spreading code, which is a sequence of code bits called chips. In the receiver, the same spreading code is used to multiply (or correlated to) the received signal so that the originally transmitted user data can be recovered. Due to multiplying with the spreading code, that is, despreading, the amplitude of the desired signal is multifold to other signals, which is called processing gain. Due to processing gain, the 5 MHz carrier frequencies can be reused in close distances.

Both the base stations and the mobile stations typically use a correlation receiver for detecting the signal. Due to multipath propagation, it is desirable to use multiple correlation receivers so as to recover all the energy from different propagation paths. Such a receiver including multiple correlation receivers (fingers) is called a RAKE receiver. The basic principle of a RAKE receiver is following: the most significant delay components are identified from the user signal, and fingers of the receiver are allocated to those components. Each correlation receiver tracks fast-changing phase and amplitude values and compensates for them. Finally, all demodulated and phase-adjusted symbols received from all fingers are combined and forwarded to a decoder for further processing.

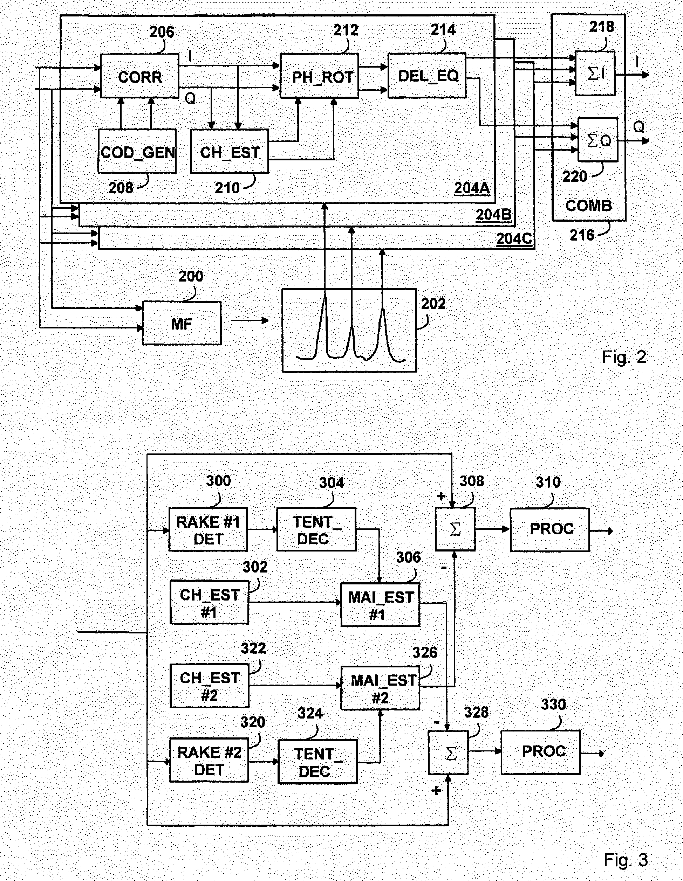

Figure 2 highlights the principle of a RAKE receiver. The receiver has a matched filter 200, which tracks the multipath components in the signal shown by the delay profile 202. The three peaks in the delay profile 202 are respectively allocated to the three fingers 204A, 204B and 204C of the receiver.

Input samples are received in the form of I- and Q-branches. The code generator 208 and the correlator 206 despread and integrate the data into user data symbols. The channel estimator 210 can estimate the channel state by using pilot symbols. The effect of the channel state can be removed by the phase rotator 212. The equalizer 214 equalizes the delays of the RAKE fingers to each other. The combiner 216 includes summing units 218 and 220 for summing the channel-compensated symbols from all fingers to provide multipath diversity against fading for the receiver.

In a CDMA system, wherein the correlation principle is applied in matched filter and/or correlators, multiple access interference (MAI) is generated due to that the spreading codes are not completely orthogonal. Because MAI is generated by other users of the network, it can be taken into consideration in the receiver. Algorithms can be categorized into centralized multi-user detection or decentralized single-user algorithms. The centralized algorithms perform multi-user detection simultaneously and are practical in base stations. The single user algorithms detect the symbols of a single user in a multi-user environment and are applicable both in a base station and in a mobile station.

Figure 3 shows on a general level a receiver applying parallel interference cancellation (PIC). The receiver of Figure 3 shows one interference cancellation stage for two users. In detection units 300 and 320, the signals of users #1 and #2 are detected and tentative decisions of the symbols are made in units 304 and 324, respectively. The channel estimates of channels used by user #1 and provided by unit 302 are used in combination of the tentative symbol estimates of user #1 to estimate the MAI of user #1. This estimate is subtracted from the total input signal in summing means 328. Correspondingly, the signal of user #2 is considered as interference from the point of view of user #1. The estimate of the user #2 signal is reduced from the total received signal in the summing unit 308 so as to alleviate detection of the user #1 signal.

The summing means 328 (and 308 respectively) may be followed by one or more additional interference cancellation stages, which are not illustrated in Figure 3. Figure 3 shows a processing unit 330 following the summing unit, which processing unit may be configured to carry out tasks such as deinterleaving, decoding of the signal and making the final symbol estimates.

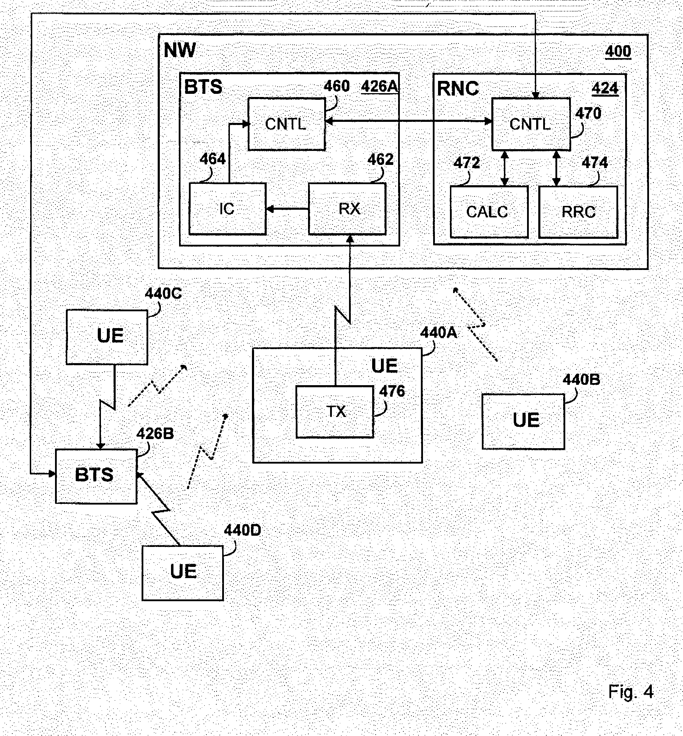

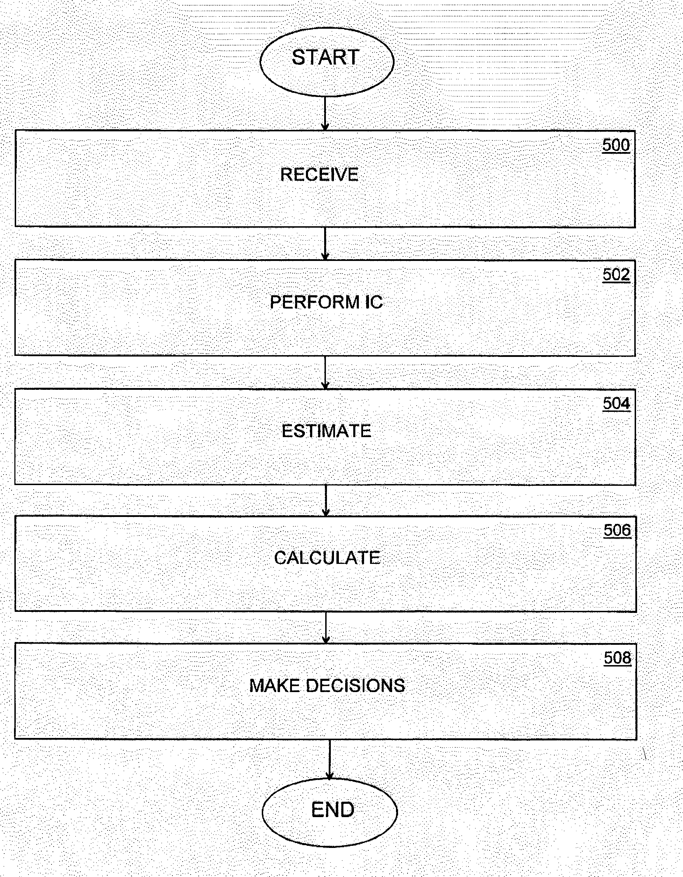

Figure 4 also shows one additional embodiment of an arrangement according to the invention. The network 400 is a mobile network having a radio network controller 424 and a base station (Node B) 426A controlled by the radio network controller.

The base station 426A serves user equipment 440A. The uplink signal transmitted by the transmitting unit 476 of user equipment is received in the receiving unit 462 of the base station. The base station performs interference cancellation in IC unit 464. The magnitude or effectiveness of interference cancellation is characterized by factor beta $b$. The control unit 460 of the base station 426A is adapted to communicate with control unit 470 of the radio network controller 424. The information between the control units may include power levels of the incoming uplink signals and noise level experienced by the base station, for instance.

The embodiment of Figure 4 shows a calculating unit 472 for calculating the load factors of the individual connections. The radio network controller 424 may also include a radio resource controller (RRC) 474 for controlling radio resources. In the embodiment of Figure 4, the RRC may compare the load level of the base station 426A to a predetermined threshold value set for the load level. If the load of the base station allows, new connections may be added to the base station. The cumulative load index is also updated with regard to terminating connections so that the load terminating connections is subtracted from the cumulative load index.

Figure 4 also shows base station 426B, which is also controlled by the radio network controller 424. The radio network controller 424 is thus aware of the connections and load situations in both base stations 426A and 426B. That is, the radio network controller 424 knows the power levels of the uplink connections from the user equipment 440C and 440D served by the base station 426B. The base station 426A sees the power of the user equipment 440C and 440D as interference power and the network controller 424 can use it when calculating parameter "interference in the other cell" of factor $i$ in formula (3). The base station 426A also serves user equipment 440B, which can be used to calculate parameter "interference in the own cell" of factor $i$ in formula (3).

Figure 5 shows one embodiment of a method according to the invention. In the method, there are mobile stations in a two-directional radio connection with the network. The network includes network elements, such as base stations or Node Bs for implementing the radio connection towards the mobile stations. Step 500 discloses reception of the uplink signals.

In 502, the network performs interference cancellation on the uplink signals. The interference cancellation method can be based on parallel interference cancellation, for instance. The invention is not, however, restricted to the interference cancellation method used.

In 504, the load (load factor), which an individual connection causes to a base station, is estimated. In one embodiment, the load estimation is done in a radio network controller controlling the base station. In another embodiment, the base station (Node B) may estimate the load of a cell itself. That may especially be the case when a packet scheduler is located in a Node B, in which case the Node B can directly use it for estimating load of a cell.

The interference cancellation methods can be given a so-called beta-value ($b$), which depicts how much of the interference is cancelled by the interference cancellation method. The beta-value or interference cancellation factor thus characterizes the effectiveness of the interference cancellation performed in the network. The beta-value can be estimated by simulations or by measuring the interference cancellation process in a large number of connections. The beta-value used in the invention can be a constant value, such as "0.2" indicating that 20% of the interference can typically be cancelled by the interference method applied. In another embodiment, contrary to using a constant value, the beta-value may be delivered connection-specifically from a base station to the radio station controller. In one embodiment, both BS and RNC have a table including possible beta values. The table may include values such as [0; 0.1; 0.2; 0.3; ... 1.0]. The index value 3, which may be signalled from Node B to RNC, thus refers to the beta-value "0.2" if the index "1" refers to the first position in the table having value (0).

In 504, the load factor can be estimated by using formula (4)

$$(4) \qquad L_j^{'} = L_j \frac{1+i-b}{1+i},$$

where

$L_j^{'}$ is the corrected load factor of the j<sup>th</sup> user

$L_j$ is the calculated load factor without taking interference cancellation into account

$b$ is the beta value of the interference cancellation and is in range [0,1]

$i$ is the ratio of interference in other cells to interference in own cell.

In calculating the value of $i$, the sum uplink signal power of all users served by a base station BS1 needs to be calculated. Then, the sum signal powers of users served by neighbouring base stations (e.g. BS2, BS3 and BS4) needs to be calculated to obtain "interference in other cells".

In 506, the cumulative load index for a certain base station is calculated by applying formula (4) to all users served by a base station. Thereby, a cumulative load index for a network element is obtained.

In 508, the network makes decisions whether a new uplink connection may be allocated to a certain base station considering the load of the base station. The individual or cumulative load index/indices for a network element is known and it is compared to a predetermined threshold value determining how much load can be allowed for a certain network element.

The invention, including different means for carrying out functions in a network, a network element, a receiver, a radio network controller, a base station or Node B may be implemented by a computer program or software, which is loadable and executable in a processor.

The computer program may be stored on a computer program distribution medium readable by a computer or a processor. The computer program medium may be, for example but not limited to, an electric, magnetic, optical, infrared or semiconductor system, device or transmission medium. The medium may be a computer readable medium, a program storage medium, a record medium, a computer readable memory, a random access memory, an erasable programmable read-only memory, a computer readable software distribution package, a computer readable signal, a computer readable telecommunications signal, and a computer readable compressed software package.

Alternatively, the invention may be implemented by ASIC (Application Specific Integrated Circuit), separate logic components or by some corresponding way.

It will be obvious to a person skilled in the art that, as the technology advances, the inventive concept can be implemented in various ways. The invention and its embodiments are not limited to the examples described above but may vary within the scope of the claims.

**Claims**

1. A method of controlling radio resources in a Code Division Multiple Access radio network, comprising:

   receiving (500) by a base station an uplink signal from user equipment using the network;
   performing (502) interference cancellation to the uplink signal by the base station;
   estimating (504) a load factor on the uplink signal, the load factor indicating a load the uplink signal causes on the network, wherein the load factor is estimated by taking into consideration the interference cancellation performed on the uplink signal;
   **characterized by**
   estimating (504) the load factor by
   calculating the load factor without interference cancellation and by,
   multiplying the calculated load factor by a factor (1+i-b)/(1+i), wherein i is a ratio of interference caused by other coverage ares of the network to interference of the base station's own coverage area of the network and b is a parameter representing an ability of the network to perform interference cancellation and having a value between [0, 1], and
   allocating (508) radio resources in the network by using the estimated load factor.

2. A method according to claim 1, further comprising:

   calculating (506) a cumulative load estimate as a sum of load factors of users of the network; and

comparing continuously the cumulative load estimate to a predetermined threshold value.

3. A method according to claim 1, wherein
the load factor depends on at least one user-specific parameter of:

bit rate, activity, chip rate, signal energy per bit, or ratio between interference in other cells to interference in an estimator's own cell.

4. A Code Division Multiple Access radio network, comprising:

receiving means (462) provided in a base station for receiving an uplink signal from user equipment using the radio network;
interference cancellation means (464) provided in the base station for performing interference cancellation on the uplink signal;
estimating means (472) for estimating a load factor for the uplink signal, the load factor indicating a load the uplink signal causes on a network element of the radio network, wherein the load factor is estimated by taking into consideration an interference cancellation performed on the uplink signal by the interference cancellation means;
**characterized by**
the estimating means (472) comprising means (472) for calculating the load factor without interference cancellation and means (472) for multiplying the calculated load factor by a factor $(1+i-b)/(1+i)$, wherein i is a ratio of interference caused by other coverage areas of the network to interference of the base station's own coverage area of the network and b is a parameter representing an ability of the network to perform interference cancellation and having a value between [0,1], and
using means (474) for using the estimated load factor when allocating radio resources in the radio network.

5. A radio network according to claim 4, further comprising:

calculating means (472) for calculating a cumulative load estimate as a sum of load factors of users of the network; and
comparing means for comparing continuously the cumulative load estimate of a radio network element to a predetermined threshold value.

6. A radio network according to claim 4, wherein the parameter b characterizes an effectiveness of the interference cancellation means to perform interference cancellation.

7. A radio network according to claim 4, wherein the parameter b is a constant.

8. A radio network according to claim 4, wherein the radio network includes:

a memory (472) for storing a set of predetermined values for the parameter b, a value of the set of predetermined values being associated with an index indicating a storage position of the value in the memory; and
means (472) for selecting an parameter b from the memory based on the index.

9. A radio network according to claim 4, configured to utilise
a load factor which depends on at least one user-specific parameter of: bit rate, activity, chip rate, signal energy per bit, or ratio between interference in other cells to interference in an estimator's own cell.

10. A radio network controller in a Code Division Multiple Access radio network, comprising:

controlling means (470, 474) for controlling at least one base station;
estimating means (472) for estimating a load of a base station controlled by the controlling means, calculating a load factor for each received uplink signal received by the base station from user equipment connected to the controlled base station, estimating the load factor of the uplink signal by taking into consideration interference cancellation performed by the base station on the received uplink signal,
**characterized by**
the estimating means (472) comprising means for calculating the load factor without interference cancellation and means for multiplying the calculated load factor by a factor $(1+i-b)/(1+i)$, wherein i is a ratio of interference caused by other coverage areas of the network to interference of the base station's own coverage area of the network and b is a parameter representing an ability of the network to perform interference cancellation and having a value between [0, 1] and

,the controlling means (470, 474) being configured to allocate radio resources for the base station controlled by the controlling means based on the estimated load factor.

11. The radio network controller of claim 10, further comprising:

calculating means (472) for calculating a cumulative load estimate as a sum of load factors of the users of the network; and

comparing means (472) for comparing continuously the cumulative load estimate to a predetermined threshold value.

12. A base station for a Code Division Multiple Access radio network, comprising:

receiving means (462) for receiving an uplink signal from user equipment connected to the base station;

Interference cancellation means (464) for performing interference cancellation on the uplink signal;

allocating means (460) for allocating resources of the base station based on a load estimate of the base station, the load estimate including a load factor indicating a load that the uplink signal causes on the base station, the load factor taking into consideration interference cancellation performed on the uplink signal, wherein the base station is configured to obtain the load factor as a load factor calculated without interference cancellation and multiplied by a factor $(1 +i-b)/(1+i)$, where i is a ratio of interference caused by another coverage area of the network to interference of an estimator's own coverage area of the network and b is a parameter representing an ability of the network to perform interference cancellation and having a value between [0, 1].

13. A computer program encoding a computer program of instructions which, when executed as a computer process by a processor provided in a node of a Code Division Multiple Access radio network, performs the steps of:

receiving (500) by a base station an uplink signal from user equipment using the network;

performing (502) interference cancellation to the uplink signal by the base station;

estimating (504) a load factor on the uplink signal, the load factor indicating a load the uplink signal causes on the network, wherein the load factor is estimated by taking into consideration the interference cancellation performed on the uplink signal;

and is **characterized by**

estimating (504) the load factor by

calculating the load factor without interference cancellation;

multiplying the calculated load factor by a factor $(1+i-b)/(1+i)$, wherein i is a ratio of interference caused by other coverage areas of the network to interference of the base station's own coverage area of the network and b is a parameter representing an ability of the network to perform interference cancellation and having a value between [0,1],and

allocating radio resources in the network by using the load factor.

**Patentansprüche**

1. Verfahren zum Steuern von Funkbetriebsmitteln in einem Codemultiplexzugriff-Funknetzwerk, umfassend:

Empfangen (500), durch eine Basisstation, eines Aufwärtssignals von Benutzerausrüstung unter Verwendung des Funknetzwerks;

Durchführen (502) von Störungslöschung an dem Aufwärtssignal durch die Basisstation;

Schätzen (504) eines Belastungsfaktors an dem Aufwärtssignal, wobei der Belastungsfaktor eine Belastung angibt, die das Aufwärtssignal an dem Netzwerk verursacht, wobei der Belastungsfaktor durch Berücksichtigung der Störungslöschung, die an dem Aufwärtssignal durchgeführt wird, geschätzt wird;

**gekennzeichnet durch**

Schätzen (504) des Belastungsfaktors **durch**

Berechnen des Belastungsfaktors ohne Störungslöschung und **durch**

Multiplizieren des berechneten Belastungsfaktors mit einem Faktor $(1+i-b)/(1+i)$, wobei i ein Verhältnis von Störungen, die **durch** andere Abdeckungsbereiche des Netzwerks verursacht werden, zu Störungen des eigenen Abdeckungsbereichs der Basisstation des Netzwerks ist und b ein Parameter ist, der eine Fähigkeit des Netzwerks zum Durchführen von Störungslöschung repräsentiert und einen Wert zwischen [0, 1] aufweist, und Zuteilen (508) von Funkbetriebsmitteln in dem Netzwerk **durch** Verwendung des geschätzten Belastungsfaktors.

2. Verfahren nach Anspruch 1, ferner umfassend:

Berechnen (506) einer kumulativen Belastungsschätzung als eine Summe von Belastungsfaktoren von Benutzern des Netzwerks;
und
kontinuierliches Vergleichen der kumulativen Belastungsschätzung mit einem im Voraus bestimmten Schwellenwert.

3. Verfahren nach Anspruch 1, wobei
der Belastungsfaktor von mindestens einem benutzerspezifischen Parameter der folgenden abhängig ist:

Bitrate, Aktivität, Chiprate, Signalenergie pro Bit oder Verhältnis zwischen Störungen in anderen Zellen zu Störungen in einer eigenen Zelle des Schätzers.

4. Codemultiplexzugriff-Funknetzwerk, umfassend:

Empfangsmittel (462), bereitgestellt in einer Basisstation, zum Empfangen eines Aufwärtssignals von Benutzerausrüstung unter Verwendung des Funknetzwerks;
Störungslöschungsmittel (464), bereitgestellt in einer Basisstation, zum Durchführen von Störungslöschung an dem Aufwärtssignal;
Schätzungsmittel (472) zum Schätzen eines Belastungsfaktors für das Aufwärtssignal, wobei der Belastungsfaktor eine Belastung angibt, die das Aufwärtssignal an einem Netzwerkelement des Funknetzwerks verursacht, wobei der Belastungsfaktor durch Berücksichtigung einer Störungslöschung, die an dem Aufwärtssignal durch das Störungslöschungsmittel durchgeführt wird, geschätzt wird;
**dadurch gekennzeichnet, dass**
das Schätzungsmittel (472) Mittel (472) zum Berechnen des Belastungsfaktors ohne Störungslöschung und Mittel (472) zum Multiplizieren des berechneten Belastungsfaktors mit einem Faktor (1+i-b)/(1+i) umfasst, wobei i ein Verhältnis von Störungen, die durch andere Abdeckungsbereiche des Netzwerks verursacht werden, zu Störungen des eigenen Abdeckungsbereichs der Basisstation des Netzwerks ist und b ein Parameter ist, der eine Fähigkeit des Netzwerks zum Durchführen von Störungslöschung repräsentiert und einen Wert zwischen [0, 1] aufweist, und
Verwendungsmittel (474) zum Verwenden des geschätzten Belastungsfaktors, wenn Funkbetriebsmittel in dem Funknetzwerk zugeteilt werden.

5. Funknetzwerk nach Anspruch 4, ferner umfassend:

Berechnungsmittel (472) zum Berechnen einer kumulativen Belastungsschätzung als eine Summe von Belastungsfaktoren von Benutzern des Netzwerks; und
Vergleichsmittel zum kontinuierlichen Vergleichen der kumulativen Belastungsschätzung eines Funknetzwerkelements mit einem im Voraus bestimmten Schwellenwert.

6. Funknetzwerk nach Anspruch 4, wobei der Parameter b eine Wirksamkeit des Störungslöschungsmittels zum Durchführen von Störungslöschung kennzeichnet.

7. Funknetzwerk nach Anspruch 4, wobei der Parameter b eine Konstante ist.

8. Funknetzwerk nach Anspruch 4, wobei das Funknetzwerk Folgendes enthält:

einen Speicher (472) zum Speichern eines Satzes von im Voraus bestimmten Werten für den Parameter b, wobei ein Wert des Satzes von im Voraus bestimmten Werten mit einem Index, der eine Speicherposition des Werts in dem Speicher angibt, assoziiert ist; und
Mittel (472) zum Auswählen eines Parameters b aus dem Speicher basierend auf dem Index.

9. Funknetzwerk nach Anspruch 4, konfiguriert zum Nutzen eines Belastungsfaktors, der von mindestens einem benutzerspezifischen Parameter der folgenden abhängig ist:

Bitrate, Aktivität, Chiprate, Signalenergie pro Bit oder
Verhältnis zwischen Störungen in anderen Zellen zu Störungen in einer eigenen Zelle des Schätzers.

10. Funknetzwerksteuerung in einem Codemultiplexzugriff-Funknetzwerk, umfassend:

Steuermittel (470, 474) zum Steuern mindestens einer Basisstation;
Schätzungsmittel (472) zum Schätzen einer Belastung einer durch das Steuermittel gesteuerten Basisstation, Berechnen eines Belastungsfaktors für jedes empfangene Aufwärtssignal, empfangen durch die Basisstation von Benutzerausrüstung, die mit der gesteuerten Basisstation verbunden ist, Schätzen des Belastungsfaktors des Aufwärtssignals durch Berücksichtigung von Störungslöschung, die durch die Basisstation an dem empfangenen Aufwärtssignal durchgeführt wurde,
**dadurch gekennzeichnet, dass**
das Schätzungsmittel (472) Mittel zum Berechnen des Belastungsfaktors ohne Störungslöschung und Mittel zum Multiplizieren des berechneten Belastungsfaktors mit einem Faktor $(1+i-b)/(1+i)$ umfasst, wobei i ein Verhältnis von Störungen, die durch andere Abdeckungsbereiche des Netzwerks verursacht werden, zu Störungen des eigenen Abdeckungsbereichs der Basisstation des Netzwerks ist und b ein Parameter ist, der eine Fähigkeit des Netzwerks zum Durchführen von Störungslöschung repräsentiert und einen Wert zwischen [0, 1] aufweist, und
das Steuermittel (470, 474) konfiguriert ist, um Funkbetriebsmittel für die Basisstation, die durch das Steuermittel gesteuert wird, basierend auf dem geschätzten Belastungsfaktor zuzuteilen.

11. Funknetzwerksteuerung nach Anspruch 10, ferner umfassend:

Berechnungsmittel (472) zum Berechnen einer kumulativen Belastungsschätzung als eine Summe von Belastungsfaktoren der Benutzer des Netzwerks; und
Vergleichsmittel (472) zum kontinuierlichen Vergleichen der kumulativen Belastungsschätzung mit einem im Voraus bestimmten Schwellenwert.

12. Basisstation für ein Codemultiplexzugriff-Funknetzwerk, umfassend:

Empfangsmittel (462) zum Empfangen eines Aufwärtssignals von Benutzerausrüstung, die mit der Basisstation verbunden ist;
Störungslöschungsmittel (464) zum Durchführen von Störungslöschung an dem Aufwärtssignal;
Zuteilungsmittel (460) zum Zuteilen von Betriebsmitteln der Basisstation basierend auf einer Belastungsschätzung der Basisstation, wobei die Belastungsschätzung einen Belastungsfaktor enthält, der eine Belastung angibt, die das Aufwärtssignal an der Basisstation verursacht, wobei der Belastungsfaktor Störungslöschung berücksichtigt, wobei die Basisstation konfiguriert ist, um den Belastungsfaktor als einen Belastungsfaktor zu erhalten, berechnet ohne Störungslöschung und multipliziert mit einem Faktor $(1+i-b)/(1+i)$, wobei i ein Verhältnis von Störungen, die durch einen anderen Abdeckungsbereich des Netzwerks verursacht werden, zu Störungen des eigenen Abdeckungsbereichs eines Schätzers des Netzwerks ist und b ein Parameter ist, der eine Fähigkeit des Netzwerks zum Durchführen von Störungslöschung repräsentiert und einen Wert zwischen [0, 1] aufweist.

13. Computerprogrammprodukt, das ein Computerprogramm mit Anweisungen codiert, die, wenn sie als ein Computerprozess durch einen in einem Knoten eines Codemultiplexzugriff-Funknetzwerks bereitgestellten Prozessor ausgeführt werden, die folgenden Schritte ausführen:

Empfangen (500), durch eine Basisstation, eines Aufwärtssignals von Benutzerausrüstung unter Verwendung des Netzwerks;
Durchführen (502) von Störungslöschung an dem Aufwärtssignal durch die Basisstation;
Schätzen (504) eines Belastungsfaktors an dem Aufwärtssignal, wobei der Belastungsfaktor eine Belastung angibt, die das Aufwärtssignal an dem Netzwerk verursacht, wobei der Belastungsfaktor unter Berücksichtigung der an dem Aufwärtssignal durchgeführten Störungslöschung geschätzt wird;
und **gekennzeichnet ist durch**
Schätzen (504) des Belastungsfaktors **durch** Berechnen des Belastungsfaktors ohne Störungslöschung;
Multiplizieren des berechneten Belastungsfaktors mit einem Faktor $(1+i-b)/(1+i)$, wobei i ein Verhältnis von Störungen, die **durch** andere Abdeckungsbereiche des Netzwerks verursacht werden, zu Störungen des eigenen Abdeckungsbereichs der Basisstation des Netzwerks ist und b ein Parameter ist, der eine Fähigkeit des Netzwerks zum Durchführen von Störungslöschung repräsentiert und einen Wert zwischen [0, 1] aufweist, und Zuteilen von Funkbetriebsmitteln in dem Netzwerk **durch** Verwendung des Belastungsfaktors.

## Revendications

1. Un procédé de commande de ressources radio dans un réseau radio à accès multiple par répartition en code, comprenant :

   réception (500), par une station de base, d'un signal en liaison montante provenant d'un équipement utilisateur utilisant le réseau,
   exécution (502) d'une annulation de brouillage vers le signal en liaison montante par la station de base,
   estimation (504) d'un facteur de charge sur le signal en liaison montante, le facteur de charge indiquant une charge que le signal en liaison montante impose au réseau, le facteur de charge étant estimé par la prise en compte de l'annulation de brouillage exécutée sur le signal en liaison montante,
   **caractérisé par**
   estimation (504) du facteur de charge par
   le calcul du facteur de charge sans annulation de brouillage, et par
   multiplication du facteur de charge calculé par un facteur (1+i-b)/(1+i), où i est un rapport du brouillage causé par d'autres zones de couverture du réseau sur le brouillage de la propre zone de couverture de la station de base du réseau et b est un paramètre représentant une capacité du réseau à exécuter une annulation de brouillage et possédant une valeur entre [0, 1], et
   attribution (508) de ressources radio dans le réseau au moyen du facteur de charge estimé.

2. Un procédé selon la revendication 1, comprenant en outre :

   calcul (506) d'une estimation de charge cumulative sous la forme d'une somme de facteurs de charge d'utilisateurs du réseau, et
   comparaison en continu de l'estimation de charge cumulative à une valeur seuil prédéterminée.

3. Un procédé selon la revendication 1, dans lequel
   le facteur de charge dépend d'au moins un paramètre spécifique à l'utilisateur parmi : débit binaire, activité, débit de puce, énergie de signal par bit ou rapport entre brouillage dans d'autres cellules sur brouillage dans une cellule propre à un estimateur.

4. Un réseau radio à accès multiple par répartition en code, comprenant :

   un moyen de réception (462) installé dans une station de base destiné à la réception d'un signal en liaison montante provenant d'un équipement utilisateur au moyen du réseau radio,
   un moyen d'annulation de brouillage (464) installé dans la station de base destiné à l'exécution d'une annulation de brouillage sur le signal en liaison montante,
   un moyen d'estimation (472) destiné à l'estimation d'un facteur de charge pour le signal en liaison montante, le facteur de charge indiquant une charge que le signal en liaison montante impose à un élément de réseau du réseau radio, le facteur de charge étant estimé par la prise en compte d'une annulation de brouillage exécutée sur le signal en liaison montante par le moyen d'annulation de brouillage, **caractérisé en ce que**
   le moyen d'estimation (472) comprend un moyen (472) de calcul du facteur de charge sans annulation de brouillage et un moyen (472) de multiplication du facteur de charge calculé par un facteur (1+i-b)/(1+i), où i est un rapport du brouillage causé par d'autres zones de couverture du réseau sur le brouillage de la propre zone de couverture de la station de base du réseau et b est un paramètre représentant une capacité du réseau à exécuter une annulation de brouillage et possédant une valeur entre [0, 1], et
   un moyen d'utilisation (474) destiné à utiliser le facteur de charge estimé lors d'attribution de ressources radio dans le réseau radio.

5. Un réseau radio selon la revendication 4, comprenant en outre :

   un moyen de calcul (472) destiné au calcul d'une estimation de charge cumulative sous la forme d'une somme de facteurs de charge d'utilisateurs du réseau, et

un moyen de comparaison destiné à la comparaison en continu de l'estimation de charge cumulative d'un élément de réseau radio à une valeur seuil prédéterminée.

6. Un réseau radio selon la revendication 4, dans lequel le paramètre b caractérise une efficacité du moyen d'annulation de brouillage à exécuter une annulation de brouillage.

7. Un réseau radio selon la revendication 4, dans lequel le paramètre b est une constante.

8. Un réseau radio selon la revendication 4, dans lequel le réseau radio comprend :

une mémoire (472) destinée à conserver en mémoire un ensemble de valeurs prédéterminées pour le paramètre b, une valeur de l'ensemble de valeurs prédéterminées étant associée à un indice indiquant une position de conservation en mémoire de la valeur dans la mémoire, et

un moyen (472) de sélection d'un paramètre b à partir de la mémoire en fonction de l'indice.

9. Un réseau radio selon la revendication 4, configuré de façon à utiliser
un facteur de charge qui dépend d'au moins un paramètre spécifique à l'utilisateur parmi : débit binaire, activité, débit de puce, énergie de signal par bit ou rapport entre brouillage dans d'autres cellules sur brouillage dans une cellule propre à un estimateur.

10. Un système de commande de réseau radio dans un réseau radio à accès multiple par répartition en code, comprenant :

un moyen de commande (470, 474) destiné à la commande d'au moins une station de base,

un moyen d'estimation (472) destiné à l'estimation d'une charge d'une station de base commandée par le moyen de commande, le calcul d'un facteur de charge pour chaque signal en liaison montante reçu par la station de base d'un équipement utilisateur raccordé à la station de base commandée, l'estimation du facteur de charge du signal en liaison montante par la prise en compte d'une annulation de brouillage exécutée par la station de base sur le signal en liaison montante reçu,

**caractérisé en ce que**

le moyen d'estimation (472) comprend un moyen de calcul du facteur de charge sans annulation de brouillage et un moyen de multiplication du facteur de charge calculé par un facteur $(1+i-b)/(1+i)$, où i est un rapport du brouillage causé par d'autres zones de couverture du réseau sur le brouillage de la propre zone de couverture de la station de base du réseau et b est un paramètre représentant une capacité du réseau à exécuter une annulation de brouillage et possédant une valeur entre [0, 1], et

le moyen de commande (470, 474) étant configuré de façon à attribuer des ressources radio pour la station de base commandée par le moyen de commande en fonction du facteur de charge estimé.

11. Le système de commande de réseau radio selon la revendication 10, comprenant en outre :

un moyen de calcul (472) destiné au calcul d'une estimation de charge cumulative sous la forme d'une somme de facteurs de charge des utilisateurs du réseau, et

un moyen de comparaison (472) destiné à la comparaison en continu de l'estimation de charge cumulative à une valeur seuil prédéterminée.

12. Une station de base pour un réseau radio à accès multiple par répartition en code, comprenant :

un moyen de réception (462) destiné à la réception d'un signal en liaison montante provenant d'un équipement utilisateur raccordé à la station de base,

un moyen d'annulation de brouillage (464) destiné à l'exécution d'une annulation de brouillage sur le signal en liaison montante,

un moyen d'attribution (460) destiné à l'attribution de ressources de la station de base en fonction d'une estimation de charge de la station de base, l'estimation de charge comprenant un facteur de charge indiquant une charge que le signal en liaison montante impose à la station de base, le facteur de charge prenant en compte l'annulation de brouillage exécutée sur le signal en liaison montante, la station de base étant configurée de façon à obtenir le facteur de charge sous la forme d'un facteur de charge calculé sans annulation de brouillage et multiplié par un facteur $(1+i-b)/(1+i)$, où i est un rapport du brouillage causé par une autre zone de couverture du réseau sur le brouillage d'une propre zone de couverture d'un estimateur du réseau et b est un paramètre représentant une capacité du réseau à exécuter une annulation de brouillage et possédant une valeur entre [0, 1].

13. Un programme informatique codant un programme informatique d'instructions qui, lorsqu'elles sont exécutées sous la forme d'un processus informatique par un processeur installé dans un noeud d'un réseau radio à accès multiple par répartition en code, exécute les étapes suivantes :

réception (500) par une station de base d'un signal en liaison montante provenant de équipement utilisateur utilisant le réseau,
exécution (502) d'une annulation de brouillage vers le signal en liaison montante par la station de base,
estimation (504) d'un facteur de charge sur le signal en liaison montante, le facteur de charge indiquant une charge que le signal en liaison montante impose au réseau, le facteur de charge étant estimé par la prise en compte de l'annulation de brouillage exécutée sur le signal en liaison montante,
et est **caractérisé par**
estimation (504) du facteur de charge par
calcul du facteur de charge sans annulation de brouillage,
multiplication du facteur de charge calculé par un facteur (1+i-b)/(1+i), où i est un rapport du brouillage causé par d'autres zones de couverture du réseau sur le brouillage de la propre zone de couverture de la station de base du réseau et b est un paramètre représentant une capacité du réseau à exécuter une annulation de brouillage et possédant une valeur entre [0, 1], et
attribution de ressources radio dans le réseau au moyen du facteur de charge.

Fig. 1

Fig. 2

Fig. 3

NW

400

BTS

460  426A

CNTL

464

IC  ←  RX

462

RNC

424

CNTL

470

CALC

472

RRC

474

440C

UE

440A

UE

TX

476

440B

UE

426B

BTS

440D

UE

Fig. 4

START

RECEIVE — 500

PERFORM IC — 502

ESTIMATE — 504

CALCULATE — 506

MAKE DECISIONS — 508

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1353451 A

**Non-patent literature cited in the description**

- **VIHRIALA J. et al.** Impacts of SQ-PIC to capacity and coverage in WCDMA uplink. *SPREAD SPECTRUM TECHNIQUES AND APPLICATIONS, 2004 IEEE EIGHT INTERNATIONAL SYMPOSIUM,* 30 August 2004, 849-853

- Overload Indicator Command Triggering. *3GPP TSG-RAN WG2 #45 BIS, Document R2-050172,* 10 January 2005, 1-4